# EUROPÄISCHE PATENTSCHRIFT

(11) **EP 4 292 412 B1**
(45) Veröffentlichungstag und Bekanntmachung des Hinweises auf die Patenterteilung: **10.12.2025**
(21) Anmeldenummer: 23168760.9
(22) Anmeldetag: 19.04.2023
(51) Int. Cl.: A01B 71/02, A01B 59/042

(54) **ASSISTENZSYSTEM FÜR EIN LANDWIRTSCHAFTLICHES GESPANN**
ASSISTANCE SYSTEM FOR AN AGRICULTURAL VEHICLE COMBINATION
SYSTÈME D'ASSISTANCE POUR UNE COMBINAISON DE VÉHICULES AGRICOLES

(30) Priorität: 15.06.2022 DE 102022115104
(43) Veröffentlichungstag der Anmeldung: 20.12.2023
(73) Patentinhaber: CLAAS Tractor S.A.S., 78141 Vélizy-Villacoublay Cedex (FR)
(72) Erfinder: Ehlert, Christian, 33719 Bielefeld (DE); Wieckhorst, Jan Carsten, 29525 Uelzen Orsteil Hanstedt 2 (DE); Birkmann, Christian, 33775 Versmold (DE)
(74) Vertreter: CLAAS Gruppe

(56) Entgegenhaltungen:
- EP-A2- 3 243 367
- EP-A2- 3 243 368
- DE-A1- 102016 118 203

## Beschreibung

Die vorliegende Erfindung betrifft ein Assistenzsystem für ein landwirtschaftliches Gespann gemäß dem Oberbegriff von Anspruch 1 sowie ein landwirtschaftliches Gespann gemäß dem Oberbegriff von Anspruch 15.

Landwirtschaftliche Gespanne setzen sich üblicherweise aus einer Zugmaschine und mindestens einem Anbaugerät zusammen. Diese Anbaugeräte werden über eine Geräteschnittstelle an die Zugmaschine angebaut. Die Anbaugeräte dienen allgemein der Durchführung einer landwirtschaftlichen Arbeitsaufgabe. Im Vordergrund stehen hier Feldbearbeitungen. Bei diesen Feldbearbeitungen kann es sich beispielsweise um Aussaat- oder Düngevorgänge handeln, um das Auftragen von Pflanzenschutzmittel, um Bodenbearbeitungen wie das Pflügen, um Erntevorgänge wie das Mähen oder um das dem Mähen nachgelagerte Pressen von Ballen. Diesen Feldbearbeitungen ist gemeinsam, dass den Zugmaschinen-Arbeitsaggregaten und den Anbaugeräte-Arbeitsaggregaten gezielt Maschinenparameter vorgegeben werden müssen, um im Rahmen eines Optimierungsprozesses eine Gespann-Optimierungsstrategie umzusetzen. Hierbei geht es darum, je nach Benutzervorgabe verschiedene Gespann-Optimierungsziele zu erreichen, die sich beispielsweise auf die Bearbeitungsqualität, die Bearbeitungsgeschwindigkeit, den Verschleiß oder die Effizienz beziehen können.

Es ist grundsätzlich schwer, optimale Einstellungen im Hinblick auf die jeweilige Gespann-Optimierungsstrategie zu finden, da sich je nach Kombination aus Zugmaschine und Anbaugerät unterschiedliche Systemverhalten einstellen, die jeweils die Vorgabe unterschiedlicher Maschinenparameter erfordern.

Der bekannte Stand der Technik (DE 10 2018 111 076 A1) von dem die Erfindung ausgeht, betrifft ein Assistenzsystem gemäß dem Oberbegriff von Anspruch 1. Das bekannte Assistenzsystem ist einem landwirtschaftlichen Gespann aus Zugmaschine und Anbaugerät zugeordnet. Sowohl der Zugmaschine als auch dem Anbaugerät ist ein Einstellautomat zur Erzeugung von Maschinenparametern für die betreffenden Arbeitsaggregate zugeordnet. Damit lassen sich individuelle Optimierungsziele dezentral für die Zugmaschine einerseits und das Anbaugerät andererseits umsetzen. Hinzu kommt bei dem bekannten Assistenzsystem, dass zur Durchführung eines Optimierungsprozesses eine den individuellen Einstellautomaten übergeordnete Steuereinheit vorgesehen ist, die als "Supervisor" bezeichnet wird. Die Einrichtung eines solchen Supervisors reduziert sich hier auf die Zusammenfassung von Regelwerken, die den individuellen Einstellautomaten zugeordnet sind. Mit dieser Systematik lässt sich das Optimierungspotenzial, das sich aus dem jeweils resultierenden Systemverhalten ergibt, kaum voll ausschöpfen. Das ist insbesondere zutreffend, wenn die jeweils umzusetzende Optimierungsstrategie zu konkurrierenden Optimierungszielen auf Seiten der Zugmaschine und des Anbaugeräts führt.

Weitere Assistenzsysteme für landwirtschaftliche Gespanne sind aus den Druckschriften EP 3 243 368 A2, EP 3 243 367 A2 und DE 10 2016 118203 A1 bekannt.

Der Erfindung liegt das Problem zugrunde, das bekannte Assistenzsystem derart auszugestalten und weiterzubilden, dass das Optimierungspotential im Rahmen des Optimierungsprozesses in einem höheren Maße ausgeschöpft wird.

Das obige Problem wird durch die Merkmale des kennzeichnenden Teils von Anspruch 1 gelöst.

Wesentlich ist die grundsätzliche Überlegung, dass ein Prozess-Supervisor vorgesehen ist, in dem eine Koordinationsvorschrift vorliegt oder generiert wird. Diese Koordinationsvorschrift ist die Basis für die Koordination von Zugmaschinen-Einstellautomaten und Anbaugeräte-Einstellautomaten zur Umsetzung der Gespann-Optimierungsstrategie. Die Koordinationsvorschrift ist dabei von einer Charakteristik des mindestens einen Zugmaschinen-Einstellautomaten und einer Charakteristik des mindestens einen Anbaugeräte-Einstellautomaten abgeleitet. Damit ist gemeint, dass sich die Koordinationsvorschrift nach einer Ableitungsregel aus den charakteristischen Merkmalen der betreffenden Einstellautomaten ergibt. Solche charakteristischen Merkmale sind beispielsweise funktionale Zusammenhänge zwischen den Arbeitsaggregaten, denen die Einstellautomaten zugeordnet sind.

Dabei ist die Koordinationsvorschrift nicht nur die Basis für die Übermittlung von Steuerdaten zwischen dem Prozess-Supervisor und den individuellen Einstellautomaten, sondern insbesondere auch für die Übertragung von Steuerdaten zwischen den individuellen Einstellautomaten, insbesondere zwischen mindestens einem Zugmaschinen-Einstellautomaten und mindestens einem Anbaugeräte-Einstellautomaten.

Die obigen Steuerdaten sind jegliche Daten, die von den Einstellautomaten zur Erzeugung der Maschinenparameter verarbeitet werden. Dies sind also Sollwerte, Stellgrößen, Sensordaten o. dgl. Bei den Maschinenparametern handelt es sich um solche Parameter, die den Arbeitsaggregaten zu deren Ansteuerung vorgegeben werden.

Der Austausch von Steuerdaten zwischen mindestens einem Zugmaschinen-Einstellautomaten und mindestens einem Anbaugeräte-Einstellautomaten ist bemerkenswert, da Zugmaschine und Anbaugerät benutzerdefiniert, also nicht vorhersehbar, zu einem landwirtschaftlichen Gespann mit einem eigenen, resultierenden Systemverhalten kombiniert werden. Dieser Austausch von Steuerdaten ermöglicht es beispielsweise, dass ein anbaugeräteseitiger Einstellautomat den Zustand eines zugmaschinenseitigen Einstellautomaten berücksichtigt. Denkbar ist in diesem Zusammenhang, dass der zugmaschinenseitige Einstellautomat dem anbaugeräteseitigen Einstellautomaten signalisiert, dass eine Regelreserve aufgebraucht ist, sodass der Leistungsbedarf des anbaugeräteseitigen Einstellautomaten zu reduzieren ist, um ein "Abwürgen" des Antriebsmotors der Zugmaschine zu vermeiden.

Im Einzelnen wird vorgeschlagen, dass in dem Prozess-Supervisor eine Koordinationsvorschrift vorliegt oder generiert wird, die von dem mindestens einen Zugmaschinen-Einstellautomaten und dem mindestens einen Anbaugeräte-Einstellautomaten abgeleitet ist, und dass der Prozess-Supervisor basierend auf der Koordinationsvorschrift die Koordination des mindestens einen Zugmaschinen-Einstellautomaten und des mindestens einen Anbaugeräte-Einstellautomaten vornimmt, indem Steuerdaten zwischen dem Prozess-Supervisor und mindestens einem Zugmaschinen-Einstellautomaten und/oder mindestens einem Anbaugeräte-Einstellautomaten übertragen werden und indem Steuerdaten zwischen mindestens einem Zugmaschinen-Einstellautomaten und mindestens einem Anbaugeräte-Einstellautomaten übertragen werden.

Die bevorzugten Ausgestaltungen gemäß den Ansprüchen 2 bis 5 betreffen vorteilhafte Inhalte der Koordinationsvorschrift. Dabei ist es nach Anspruch 2 von besonderer Bedeutung, welche Steuerdaten im Rahmen der Umsetzung der Optimierungsstrategie zwischen den individuellen Einstellautomaten von Zugmaschine und Anbaugerät zu übertragen sind. Im einfachsten Fall werden hier lediglich Zuordnungen zwischen den betreffenden Steuerdaten definiert, die der Prozess-Supervisor im Rahmen des Optimierungsprozesses berücksichtigt.

Bei der weiter bevorzugten Ausgestaltung gemäß Anspruch 3 wird davon ausgegangen, dass die individuellen Einstellautomaten entsprechend individuelle Optimierungsziele umsetzen können. In diesem Fall ist in der Koordinationsvorschrift eine Information darüber enthalten, ob die individuellen, zugmaschinenseitigen und anbaugeräteseitigen Optimierungsziele unabhängig voneinander umsetzbar sind. Falls dies nicht der Fall ist, ist in der Koordinationsvorschrift vorzugsweise eine Information darüber enthalten, inwieweit die individuellen Optimierungsziele voneinander abhängen und insbesondere, inwieweit die individuellen Optimierungsziele miteinander konkurrieren oder sogar einander ausschließen. Dies wird von dem Prozess-Supervisor im Rahmen des Optimierungsprozesses ebenfalls berücksichtigt.

Bei der weiter bevorzugten Ausgestaltung gemäß Anspruch 4 ist vorgesehen, dass die Koordinationsvorschrift Informationen darüber enthält, ob zugmaschinenseitige Optimierungsziele und anbaugeräteseitige Optimierungsziele konkurrierend wirken. Das kann vom Prozess-Supervisor während des Optimierungsprozesses entsprechend berücksichtigt werden.

Die zugmaschinenseitigen und anbaugeräteseitigen Steuerdaten können auch über funktionale Zusammenhänge miteinander in Beziehung stehen. Ein Beispiel hierfür sind zugmaschinenseitige Steuerdaten, die das Ausgangsmoment der Zapfwelle betreffen sowie anbaugeräteseitige Steuerdaten, die das Eingangsmoment der anbaugeräteseitigen Antriebswelle betreffen.

Die obigen, funktionalen Zusammenhänge lassen sich datentechnisch besonders gut durch ein Kennfeld oder eine Reihe von Kennfeldern abbilden (Anspruch 6). Dabei lassen sich aggregatübergreifende Zusammenhänge leicht durch einen Vergleich der die Kennfelder betreffenden Variablen erfassen. Beispielsweise lässt sich ein zugmaschinenseitiges Kennfeld, das eine Effizienz betrifft, ohne weiteres einem ebenfalls eine Effizienz betreffenden, anbaugeräteseitigen Kennfeld zuordnen.

Bei der weiter bevorzugten Ausgestaltung gemäß Anspruch 7 entspricht die Gespann-Optimierungsstrategie einer Mehrzieloptimierung aus mehreren Gespann-Optimierungszielen, die basierend auf der Koordinationsvorschrift in individuelle Optimierungsziele übersetzt werden. Hierbei findet im Prozess-Supervisor basierend auf der Koordinationsvorschrift vorzugsweise eine Abwägung statt, mit welchen individuellen Optimierungszielen die Gespann-Optimierungsziele am besten erreicht werden können.

Die weiter bevorzugte Ausgestaltung gemäß Anspruch 8 trägt dem Umstand Rechnung, dass bei einem Gespann die Zugmaschine und das Anbaugerät in Fahrtrichtung gesehen versetzt angeordnet sind. Beispielsweise ist es denkbar, dass die Zugmaschine vorderseitig ein Anbaugerät in Form eines Mähaggregats und rückseitig ein Anbaugerät in Form eines Häckseltransportwagens aufweist. Hier ist es so, dass Steuerdaten des Mähaggregats über dessen Mäh-Einstellautomaten an das rückseitige Häckselaggregat geleitet werden kann, was basierend auf der Koordinationsvorschrift eine vorausschauende Ansteuerung des Häckselautomaten ermöglicht. Insbesondere ist es denkbar, dass der Mähautomat aufgrund eines ansteigenden Feldbestands einen erhöhten Leistungsbedarf an den Häckselautomaten meldet, noch bevor dieser Leistungsbedarf am Häckselautomaten entsteht. Insoweit ist die Berücksichtigung der zeitlichen Abfolge von Steuerdaten des mindestens einen Zugmaschinen-Einstellautomaten und/oder des mindestens einen Anbaugeräte-Einstellautomaten von besonderer Bedeutung.

Die weiter bevorzugte Ausgestaltung gemäß Anspruch 9 ermöglicht den Eingriff des Benutzers in die Definition der Gespann-Optimierungsstrategie über eine Ein-/Ausgabeeinheit. In besonders bevorzugter Ausgestaltung gibt der Prozess-Supervisor dem Benutzer nur solche Gespann-Optimierungsstrategien zur Auswahl, die mit dem jeweils aktuellen landwirtschaftlichen Gespann auch umsetzbar sind.

Auch die bevorzugte Ausgestaltung gemäß Anspruch 10 betrifft eine Mehrzieloptimierung, wobei ein Gespann-Optimierungsziel die Zugmaschine und ein anderes Gespann-Optimierungsziel das Anbaugerät betrifft. Sofern diese beiden Gespann-Optimierungsziele nicht unabhängig voneinander umsetzbar sind, ist wiederum eine Gewichtung der Gespann-Optimierungsziele vorgesehen.

Vorzugsweise ist das Assistenzsystem mit mehreren Zugmaschinen-Einstellautomaten ausgestattet, die beispielsweise einen Motor-Einstellautomaten, einen Zapfwellen-Einstellautomaten oder einen Reifendruck-Einstellautomaten umfassen. Hier zeigt sich der Vorteil der vorschlagsgemäßen Lösung besonders deutlich. Denn angesichts der generischen Konzeption der Koordinationsvorschrift kommt es nicht darauf an, in welcher Anzahl die Einstellautomaten vorhanden sind.

Die Koordinationsvorschrift kann grundsätzlich vom Prozess-Supervisor selbst generiert werden. Alternativ ist es vorgesehen, dass der Prozess-Supervisor die Koordinationsvorschrift von einem externen, hier und vorzugsweise cloudbasierten, Datenverarbeitungssystem empfängt. Im letztgenannten Fall kann die Koordinationsvorschrift extern basierend auf einer Vielzahl von Informationsquellen, insbesondere mittels Expertensystemen, und mit hoher Rechenleistung erstellt werden. Dies kann speziell beim Vorliegen einer Mehrzahl von Einstellautomaten vorteilhaft sein.

Die vorschlagsgemäße Lösung lässt sich für alle Arten von zugmaschinenseitigen und anbaugeräteseitigen Einstellautomaten anwenden. Vorteilhafte Varianten für diese Einstellautomaten sind Gegenstand von Anspruch 13.

Ferner lassen sich mit der vorschlagsgemäßen Lösung nahezu beliebige Optimierungsziele umsetzen. Anspruch 14 betrifft die bevorzugten Optimierungsziele betreffend eine Bearbeitungsqualität, eines Durchsatzes, eines Verschleißes, einer Effizienz oder Kosten. Je nach Zusammenstellung des landwirtschaftlichen Gespanns sind zahlreiche weitere Gespann-Optimierungsziele denkbar.

Nach einer weiteren Lehre gemäß Anspruch 15, der eigenständige Bedeutung zukommt, wird ein landwirtschaftliches Gespann als solches beansprucht. Dabei ist wesentlich, dass das landwirtschaftliche Gespann ein Assistenzsystem nach einem der vorhergehenden Ansprüche aufweist. Auf alle Ausführungen zu Assistenzsystem darf verwiesen werden.

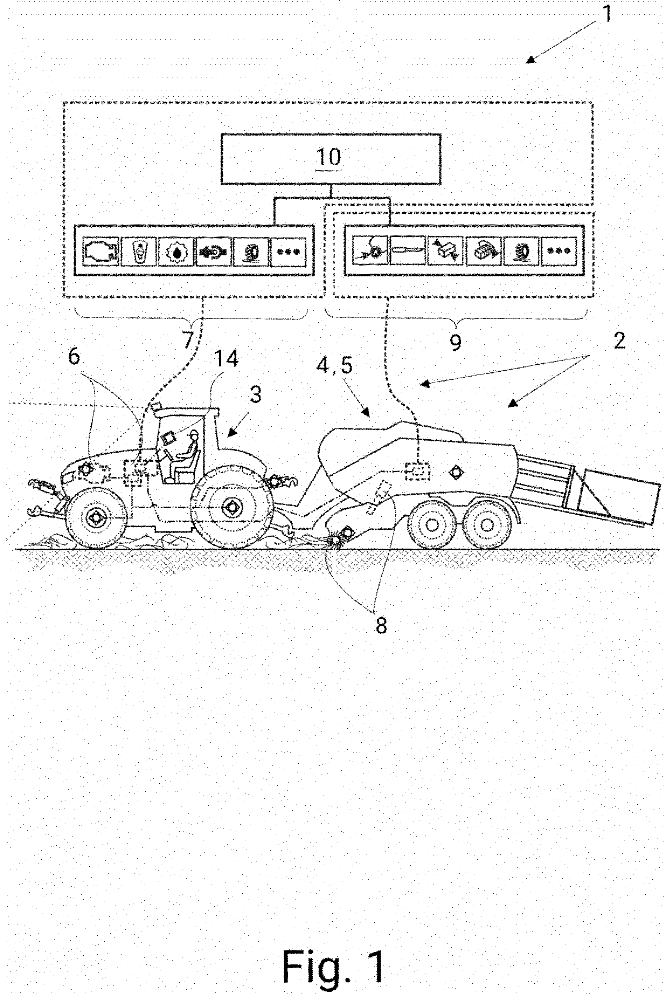

Im Folgenden wird die Erfindung anhand einer lediglich Ausführungsbeispiele darstellenden Zeichnung näher erläutert. In der Zeichnung zeigt
- Fig. 1: ein vorschlagsgemäßes landwirtschaftliches Gespann mit einem vorschlagsgemäßen Assistenzsystem in einem Strukturbild und
- Fig. 2: das Assistenzsystem gemäß Fig. 1 in einem Strukturbild.

Das in den Figuren dargestellte und insoweit bevorzugte Ausführungsbeispiel betrifft ein Assistenzsystem 1 für ein landwirtschaftliches Gespann 2, wobei das landwirtschaftliche Gespann 2 aus mindestens einer Zugmaschine 3 und mindestens einem Anbaugerät 4 eine Anzahl von Arbeitsaggregaten aufweist.

Bei der Zugmaschine 3 kann es sich um jedwede Art einer Zugmaschine 3, beispielsweise um einen Traktor, handeln. Bei dem Anbaugerät 4 kann es sich ebenfalls um jedwede Art eines Anbaugeräts 4, beispielsweise um einen Pflug, eine Egge, einen Grubber, einen Düngerstreuer, eine Mähmaschine, einen Heuwender oder um eine Ballenpresse 5 handeln. Im Folgenden steht ein landwirtschaftliches Gespann 2 aus einem Traktor und einem Anbaugerät 4 mit einer Ballenpresse 5 im Vordergrund. Alle diesbezüglichen Ausführungen gelten für alle anderen Gerätekombinationen entsprechend.

Das Assistenzsystem 1 weist zur Ansteuerung der Zugmaschinen-Arbeitsaggregate 6 mindestens einen Zugmaschinen-Einstellautomaten 7 auf, der Steuerdaten verarbeitet, um Maschinenparameter für das betreffende Zugmaschinen-Arbeitsaggregat 6 zu erzeugen.

Ein "Automat" im vorliegenden Sinne dient vorliegend der autonomen Ansteuerung eines Arbeitsaggregats zur Umsetzung einer Optimierungsstrategie, indem Maschinenparameter erzeugt und dem Arbeitsaggregat zugeführt werden. Der Automat kann einen Regelinterpreter, der Regeln eines Regelwerks abarbeitet, Regelkreise zum Einregeln von Sollwerten o. dgl. umfassen. Ein Arbeitsaggregat, dem ein solcher Automat zugeordnet ist, kann bei Vorgabe der Optimierungsstrategie, die ein oder mehrere Optimierungsziele umfassen kann, autonom arbeiten. Der Automat kann als in sich abgeschlossene Hardware-Steuereinheit realisiert sein. Denkbar ist aber auch, dass der Automat als Software-Steuereinheit realisiert ist, die zusammen mit anderen Automaten auf einer Hardware läuft.

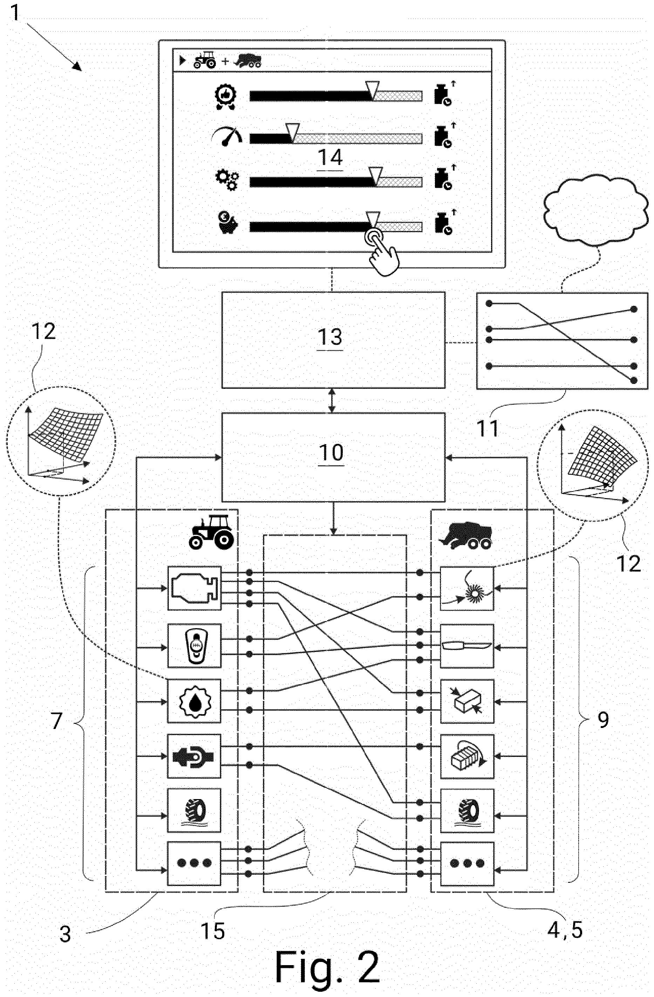

Bei typischen Zugmaschinen-Einstellautomaten 7, die jeweils entsprechenden Arbeitsaggregaten zugeordnet sind, handelt es sich um einen Motor-Einstellautomaten, einen Getriebe-Einstellautomaten, einen Hydraulik-Einstellautomaten, einen Zapfwellen-Einstellautomaten, einen Reifendruck-Einstellautomaten o. dgl. Diese Zugmaschinen-Einstellautomaten 7 sind in Fig. 2 durch entsprechende Piktogramme dargestellt.

Das Assistenzsystem 1 weist zur Ansteuerung der Anbaugeräte-Arbeitsaggregate 8 mindestens einen Anbaugeräte-Einstellautomaten 9 auf, der grundsätzlich wie die Zugmaschinen-Einstellautomaten 7 arbeitet (auch hier ist es so, dass der Anbaugeräte-Einstellautomat 9 Steuerdaten verarbeitet, um Maschinenparameter für das betreffende Anbaugeräte-Arbeitsaggregat 8 zu erzeugen), jedoch anbaugeräteseitig vorgesehen ist. Bei typischen Anbaugeräte-Einstellautomaten 9 handelt es sich am Beispiel der dargestellten Ballenpresse 5 um einen Pickup-Automaten, einen Schneid-Einstellautomaten, einen Pressdruck-Einstellautomaten, einen Wickel-Einstellautomaten, einen Reifendruck-Einstellautomaten o. dgl. Auch diese Anbaugerät-Einstellautomaten sind in Fig. 2 durch entsprechende Piktogramme dargestellt.

Das Assistenzsystem 1 weist einen Prozess-Supervisor 10 auf, der die Zugmaschinen-Einstellautomaten 7 und die Anbaugeräte-Einstellautomaten 9 im Rahmen eines Optimierungsprozesses zur Umsetzung einer Gespann-Optimierungsstrategie mit mindestens einem Gespann-Optimierungsziel, vorzugsweise mit mehreren Gespann-Optimierungszielen, koordiniert. Der Prozess-Supervisor 10 ist eine Steuereinheit. Er kann als in sich abgeschlossene Hardware-Steuereinheit realisiert sein. Denkbar ist aber auch, dass der Prozess-Supervisor 10 als Software-Steuereinheit realisiert ist, die zusammen mit anderen Automaten o. dgl. auf einer Hardware läuft.

Die Zugmaschinen-Einstellautomaten 7 und die Anbaugeräte-Einstellautomaten 9 sind jeweils dafür eingerichtet, individuelle Optimierungsziele umzusetzen. Da die zugeordneten Arbeitsaggregate auf Seiten der Zugmaschine 3 und auf Seiten des Anbaugeräts 4 stets in einem funktionalen Zusammenhang zueinander stehen, lassen sich gute Optimierungsergebnisse mit getrennt ablaufenden, individuellen Optimierungsprozessen kaum erreichen.

Wesentlich ist daher zunächst, dass für eine optimale Koordination der Einstellautomaten in dem Prozess-Supervisor 10 eine Koordinationsvorschrift 11 vorliegt oder generiert wird, die von dem mindestens einen Zugmaschinen-Einstellautomaten 7 und dem mindestens einen Anbaugeräte-Einstellautomaten 9 abgeleitet ist. Wesentlich ist weiter, dass der Prozess-Supervisor 10 basierend auf der Koordinationsvorschrift 11 die Koordination des mindestens einen Zugmaschinen-Einstellautomaten 7 und des mindestens einen Anbaugeräte-Einstellautomaten 9 vornimmt, indem Steuerdaten zwischen dem Prozess-Supervisor 10 und mindestens einem Zugmaschinen-Einstellautomaten 7 und/oder mindestens einem Anbaugeräte-Einstellautomaten 9 übertragen werden und indem Steuerdaten zwischen mindestens einem Zugmaschinen-Einstellautomaten 7 und mindestens einem Anbaugeräte-Einstellautomaten 9 übertragen werden.

Mit der Anwendung einer vorschlagsgemäßen Koordinationsvorschrift 11 und speziell durch die Übertragung von Steuerdaten zwischen mindestens einem Zugmaschinen-Einstellautomaten 7 und mindestens einem Anbaugeräte-Einstellautomaten 9 lässt sich eine Optimierungsgüte für das gesamte landwirtschaftliche Gespann 2 erreichen, die weit über die Optimierungsgüte hinausgeht, die erreichbar wäre, wenn jeder Einstellautomat separat für sich optimiert würde.

Bei dem dargestellten Ausführungsbeispiel umfasst das landwirtschaftliche Gespann 2 nur ein einziges Anbaugerät 4, das wie oben angesprochen eine Ballenpresse 5 aufweist. Grundsätzlich können auch zwei oder mehr Anbaugeräte 4 vorgesehen sein.

Der Prozess-Supervisor 10 hat nun die Aufgabe, die Zugmaschinen-Einstellautomaten 7 und die Anbaugeräte-Einstellautomaten 9 so miteinander zu koordinieren, dass die Gespann-Optimierungsstrategie umgesetzt wird. Hierfür steht dem Prozess-Supervisor 10 vorschlagsgemäß die Koordinationsvorschrift 11 zur Verfügung.

Für die Auslegung der Koordinationsvorschrift 11 sind zahlreiche Möglichkeiten denkbar. Hier und vorzugsweise ist es vorgesehen, dass die Koordinationsvorschrift 11 definiert, welche Steuerdaten auf welche Weise im Rahmen der Umsetzung der Optimierungsstrategie zwischen mindestens einem Zugmaschinen-Einstellautomaten 7 und mindestens einem Anbaugeräte-Einstellautomaten 9 zu übertragen sind. Fig. 2 zeigt anhand eines Steuerdaten-Austauschschemas beispielhaft und nicht erschöpfend, welcher Austausch von Steuerdaten grundsätzlich vorgesehen ist. Ein Beispiel ist der Austausch von Steuerdaten zwischen dem zugmaschinenseitigen Motor-Einstellautomat und dem anbaugeräteseitigen Reifendruck-Einstellautomat derart, dass der anbaugeräteseitige Reifendruck-Einstellautomat auf eine eine Mindestschwelle unterschreitende Regelreserve des zugmaschinenseitigen Verbrennungsmotors reagieren kann. In welcher Weise die betreffenden Steuerdaten zu übertragen sind, kann insbesondere regelbasiert erfolgen. Im einfachsten Fall werden die betreffenden Steuerdaten ständig oder zyklisch oder triggerbasiert übertragen und vom jeweiligen Empfänger im Bedarfsfall genutzt.

Der mindestens eine Zugmaschinen-Einstellautomat 7 und der mindestens eine Anbaugeräte-Einstellautomat 9 sind vorzugsweise eingerichtet, individuelle Optimierungsziele umzusetzen. Die Koordinationsvorschrift 11 definiert dann, wie der Prozess-Supervisor 10 im Rahmen der Umsetzung der Optimierungsstrategie individuelle Optimierungsziele erzeugt und vorgibt. Beim dargestellten Ausführungsbeispiel könnte die Gespann-Optimierungsstrategie das Gespann-Optimierungsziel im Hinblick auf die Bearbeitungsqualität umfassen. Aus der Koordinationsvorschrift 11 ergibt sich dann, dass die Bearbeitungsqualität über den Pressdruck und die Wicklungsvorschrift innerhalb der Ballenpresse einstellbar ist, sodass sich für den Pressdruck-Einstellautomaten und den Wickel-Einstellautomaten ein jeweils individuelles Optimierungsziel im Hinblick auf die Bearbeitungsqualität, hier im Einzelnen im Hinblick auf die Qualität der Ballenerzeugung, ergibt.

Weiter ist hier und vorzugsweise vorgesehen, dass der mindestens eine Zugmaschinen-Einstellautomat 7 und der mindestens eine Anbaugeräte-Einstellautomat 9 eingerichtet sind, individuelle Optimierungsziele umzusetzen, wobei die Koordinationsvorschrift 11 definiert, inwieweit zugmaschinenseitige Optimierungsziele und anbaugeräteseitige Optimierungsziele konkurrierend wirken.

Optimierungsziele, die konkurrierend wirken, sind oftmals die anbauseitige Optimierung des Durchsatzes einserseits und die zugmaschinenseitige Optimierung der Effizienz andererseits. Denn die Erhöhung des Durchsatzes ist im Fall der Ballenpresse 5 mit einer Erhöhung des Leistungsbedarfs verbunden, der wiederum meist mit einer Erhöhung des Kraftfstoffbedarfs und damit bei vereinfachter Betrachtung mit einer Reduzierung der Effizienz verbunden ist.

Die Koordinationsvorschrift 11 definiert vorzugsweise auch Beziehungen zwischen Steuerdaten des mindestens einen Zugmaschinen-Einstellautomaten 7 und des mindestens einen Anbaugeräte-Einstellautomaten 9, die auf funktionale Zusammenhänge, insbesondere mechanische Verbindungen oder Kopplungen, zwischen dem betreffenden Zugmaschinen-Aggregat und dem betreffenden Anbaugeräte-Aggregat zurückgehen. Solche funktionale Zusammenhänge sind im einfachsten Fall darauf zurückzuführen, dass eine antriebstechnische Kopplung zwischen Zugmaschine 3 und Anbaugerät 4 vorliegt.

Weiter ist hier und vorzugsweise vorgesehen, dass der mindestens eine Zugmaschinen-Einstellautomat 7 und/oder der mindestens eine Anbaugeräte-Einstellautomat 9 mindestens ein Kennfeld 12 umfasst, das funktionale Zusammenhänge innerhalb des betreffenden Arbeitsaggregats repräsentiert. Diese funktionalen Zusammenhänge repräsentierenden Kennfelder 12 sind in Fig. 2 lediglich angedeutet. Es wurde weiter oben bereits darauf hingewiesen, dass sich Kennfelder 12 besonders gut für die systematische Erfassung funktionaler Zusammenhänge eignen.

Die vorschlagsgemäße Lösung eignet sich in besonderer Weise in dem Fall, dass die Gespann-Optimierungsstrategie mehrere Gespann-Optimierungsziele umfasst. Dann ist es Aufgabe des Prozess-Supervisors 10, im Rahmen des Optimierungsprozesses die Gespann-Optimierungsziele basierend auf der Koordinationsvorschrift 11 in individuelle Optimierungsziele zu übersetzen und dem mindestens einen Zugmaschinen-Einstellautomaten 7 und/oder dem mindestens einen Anbaugeräte-Einstellautomaten 9 vorzugeben.

Die Möglichkeit einer vorausschauenden Umsetzung einer Optimierungsstrategie ergibt sich dadurch, dass die Koordinationsvorschrift 11 die zeitliche Abfolge von Steuerdaten des mindestens einen Zugmaschinen-Einstellautomaten 7 und/oder des mindestens einen Anbaugeräte-Einstellautomaten 9 umfasst. Eine Gespann-Optimierungsstrategie umfasst dabei vorzugsweise die Umsetzung von Gespann-Optimierungszielen, indem Steuerdaten basierend auf der Koordinationsvorschrift 11 und insbesondere der zeitlichen Abfolge der Steuerdaten vorausschauend berücksichtigt werden. Im dargestellten Ausführungsbeispiel kann der Prozess-Supervisor 10 das Anbaugerät 4 bereits mit mechanischer Leistung versorgen, noch bevor der Leistungsbedarf überhaupt entsteht.

Vorzugsweise weist das Assistenzsystem 1 ein Fahrerassistenzsystem 13 mit einer Ein-/Ausgabeeinheit 14 für den Dialog mit dem Benutzer auf, wobei die Gespann-Optimierungsstrategie über die Ein-/Ausgabeeinheit 14 vom Benutzer parametrierbar ist. Vorzugsweise stellt der Prozess-Supervisor 10 basierend auf der Koordinationsvorschrift 11 über die Ein-/Ausgabeeinheit 14 verschiedene Gespann-Optimierungsstrategien zur Auswahl und/oder Parametrierung durch den Benutzer.

Weiter ist hier und vorzugsweise vorgesehen, dass die Gespann-Optimierungsstrategie mehrere Gespann-Optimierungsziele aufweist. Den Gespann-Optimierungszielen kann dann über die Ein-/Ausgabeeinheit 14 jeweils eine Gewichtung zugeordnet werden, wobei der Prozess-Supervisor 10 die einzelnen Gespann-Optimierungsziele gewichtet umsetzt. Dies ist in Fig. 2 gezeigt. Hier ist es vorgesehen, dass der Benutzer über zugeordnete Schieberegler, die beispielsweise in einem Touch-Screen dargestellt und verstellbar sind, eine Einstellung der Gewichtung vornehmen kann. Den Schiebereglern sind von oben nach unten gesehen die Optimierungsziele hinsichtlich Bearbeitungsqualität, Durchsatzes, Verschleißes oder Effizienz zugeordnet.

Alternativ oder zusätzlich (nicht dargestellt) kann es vorteilhaft sein, dass hinsichtlich eines Optimierungsziels eine Gewichtung zwischen der Zugmaschine 3 und dem Anbaugerät 4 benutzerseitig einstellbar ist. Beispielsweise kann es vorgesehen sein, dass ein Optimierungsziel die Optimierung hinsichtlich eines Verschleißes betrifft, wobei eine Gewichtung vorgenommen werden kann, ob es sich eher um den Verschleiß in der Zugmaschine 3 oder in dem Anbaugerät 4 handeln soll.

Vorzugsweise weist das Assistenzsystem 1 mehrere Zugmaschinen-Einstellautomaten 7 auf, die der Einstellung von Maschinenparametern zugeordneter Arbeitsaggregate der Zugmaschine 3 dienen. Alternativ oder zusätzlich weist das Assistenzsystem 1 mehrere Anbaugeräte-Einstellautomaten 9 auf, die der Einstellung von Maschinenparametern zugeordneter Arbeitsaggregate des Anbaugerätes 4 dienen.

Hier wird deutlich, dass die Steuerung des landwirtschaftlichen Gespanns 2 dadurch, dass vorschlagsgemäß der Prozess-Supervisor 10 und die zugeordnete Koordinationsvorschrift 11 vorgesehen sind, auf besonders einfache Weise möglich ist, selbst wenn eine Mehrzahl von Einstellautomaten vorhanden sind.

Der optimalen Erzeugung der Koordinationsvorschrift 11 kommt vorliegend ganz besondere Bedeutung zu. Entsprechend ist es vorzugsweise vorgesehen, dass der Prozess-Supervisor 10 die Koordinationsvorschrift 11 aus einer Charakteristik des mindestens einen Zugmaschinen-Einstellautomaten 7 und aus einer Charakteristik des mindestens einen Anbaugeräte-Einstellautomaten 9 ableitet. Alternativ und besonders bevorzugt ist es allerdings vorgesehen, dass der Prozess-Supervisor 10 die Koordinationsvorschrift 11 von einem externen, insbesondere cloudbasierten Datenverarbeitungssystem empfängt.

Es wurde schon darauf hingewiesen, dass der mindestens eine Zugmaschinen-Einstellautomat 7 als Motor-Einstellautomat, als Getriebe-Einstellautomat, als Hydraulik-Einstellautomat, als Zapfwellen-Einstellautomat, als Reifendruck-Einstellautomat o. dgl. ausgestaltet sein kann. Alternativ oder zusätzlich kann der mindestens eine Anbaugeräte-Einstellautomat 9 als Pickup-Einstellautomat, als Schneid-Einstellautomat, als Pressdruck-Einstellautomat, als Wickel-Einstellautomat, als Reifendruck-Einstellautomat o. dgl. ausgestaltet sein.

Weiter ist hier und vorzugsweise vorgesehen, dass ein Gespann-Optimierungsziel die Optimierung einer Bearbeitungsqualität, eines Durchsatzes, eines Verschleißes oder einer Effizienz des landwirtschaftlichen Gespanns 2 ist. Andere Gespann-Optimierungsziele sind denkbar.

Beansprucht wird außerdem gemäß einer weiteren Lehre, der eigenständige Bedeutung zukommt, ein landwirtschaftliches Gespann 2 mit einer Zugmaschine 3 und einem Anbaugerät 4. Wesentlich ist nach dieser weiteren Lehre, dass das landwirtschaftliche Gespann 2 die Realisierung eines vorschlagsgemäßen Assistenzsystems 1 aufweist. Auf alle Ausführungen zur ersten Lehre darf verwiesen werden.

### Bezugszeichenliste

- 1: Assistenzsystem
- 2: landwirtschaftliches Gespann
- 3: Zugmaschine
- 4: Anbaugerät
- 5: Ballenpresse
- 6: Zugmaschinen-Arbeitsaggregat
- 7: Zugmaschinen-Einstellautomat
- 8: Anbaugeräte-Arbeitsaggregat
- 9: Anbaugeräte-Einstellautomat
- 10: Prozess-Supervisor
- 11: Koordinationsvorschrift
- 13: Fahrerassistenzsystem
- 14: Ein-/Ausgabeeinheit
- 15: Austauschschema

## Patentansprüche

1. Assistenzsystem für ein landwirtschaftliches Gespann (2) wobei das landwirtschaftliche Gespann (2) aus mindestens einer Zugmaschine (3) und mindestens einem Anbaugerät (4) eine Anzahl von Arbeitsaggregaten aufweist, wobei das Assistenzsystem (1) zur Ansteuerung von Zugmaschinen-Arbeitsaggregaten (6) mindestens einen Zugmaschinen-Einstellautomaten (7) aufweist, der Steuerdaten verarbeitet, um Maschinenparameter für das betreffende Zugmaschinen-Arbeitsaggregat (6) zu erzeugen, wobei das Assistenzsystem (1) zur Ansteuerung von Anbaugeräte-Arbeitsaggregaten (8) mindestens einen Anbaugeräte-Einstellautomaten (9) aufweist, der Steuerdaten verarbeitet, um Maschinenparameter für das betreffende Anbaugeräte-Arbeitsaggregat (8) zu erzeugen, wobei das Assistenzsystem (1) einen Prozess-Supervisor (10) aufweist, der Zugmaschinen-Einstellautomaten (7) und Anbaugeräte-Einstellautomaten (9) im Rahmen eines Optimierungsprozesses zur Umsetzung einer Gespann-Optimierungsstrategie mit mindestens einem Gespann-Optimierungsziel koordiniert,
**dadurch gekennzeichnet,**
**dass** das Assistenzsystem derart ausgebildet ist, so dass in dem Prozess-Supervisor (10) eine Koordinationsvorschrift (11) vorliegt oder generiert wird, die von dem mindestens einen Zugmaschinen-Einstellautomaten (7) und dem mindestens einen Anbaugeräte-Einstellautomaten (9) abgeleitet ist, und dass der Prozess-Supervisor (10) basierend auf der Koordinationsvorschrift (11) die Koordination des mindestens einen Zugmaschinen-Einstellautomaten (7) und des mindestens einen Anbaugeräte-Einstellautomaten (9) vornimmt, indem Steuerdaten zwischen dem Prozess-Supervisor (10) und mindestens einem Zugmaschinen-Einstellautomaten (7) und mindestens einem Anbaugeräte-Einstellautomaten (9) übertragen werden und indem Steuerdaten zwischen mindestens einem Zugmaschinen-Einstellautomaten (7) und mindestens einem Anbaugeräte-Einstellautomaten (9) übertragen werden.

2. Assistenzsystem nach Anspruch 1, **dadurch gekennzeichnet, dass** die Koordinationsvorschrift (11) definiert, welche Steuerdaten in welcher Weise im Rahmen der Umsetzung der Optimierungsstrategie zwischen mindestens einem Zugmaschinen-Einstellautomaten (7) und mindestens einem Anbaugeräte-Einstellautomaten (9) zu übertragen sind.

3. Assistenzsystem nach Anspruch 1 oder 2, **dadurch gekennzeichnet, dass** der mindestens eine Zugmaschinen-Einstellautomat (7) und der mindestens eine Anbaugeräte-Einstellautomat (9) eingerichtet sind, individuelle Optimierungsziele umzusetzen und dass die Koordinationsvorschrift (11) definiert, wie der Prozess-Supervisor (10) im Rahmen der Umsetzung der Optimierungsstrategie individuelle Optimierungsziele erzeugt und vorgibt.

4. Assistenzsystem nach einem der vorhergehenden Ansprüche, **dadurch gekennzeichnet, dass** der mindestens eine Zugmaschinen-Einstellautomat (7) und der mindestens eine Anbaugeräte-Einstellautomat (9) eingerichtet sind, individuelle Optimierungsziele umzusetzen und dass die Koordinationsvorschrift (11) definiert, inwieweit zugmaschinenseitige Optimierungsziele und anbaugeräteseitige Optimierungsziele konkurrierend wirken.

5. Assistenzsystem nach Anspruch 1 oder 2, **dadurch gekennzeichnet, dass** die Koordinationsvorschrift (11) Beziehungen zwischen Steuerdaten mindestens eines Zugmaschinen-Einstellautomaten (7) und mindestens eines Anbaugeräte-Einstellautomaten (9) definiert, die auf funktionale Zusammenhänge, insbesondere mechanische Verbindungen oder Kopplungen, zwischen dem betreffenden Zugmaschinen-Aggregat und dem betreffenden Anbaugeräte-Aggregat zurückgehen.

6. Assistenzsystem nach einem der vorhergehenden Ansprüche, **dadurch gekennzeichnet, dass** der mindestens eine Zugmaschinen-Einstellautomat (7) und/oder der mindestens eine Anbaugeräte-Einstellautomat (9) mindestens ein Kennfeld (12) umfasst, das funktionale Zusammenhänge innerhalb des betreffenden Arbeitsaggregats repräsentiert.

7. Assistenzsystem nach einem der vorhergehenden Ansprüche, **dadurch gekennzeichnet, dass** die Gespann-Optimierungsstrategie mehrere Gespann-Optimierungsziele umfasst, die der Prozess-Supervisor (10) im Rahmen des Optimierungsprozesses basierend auf der Koordinationsvorschrift (11) in individuelle Optimierungsziele übersetzt und mindestens einem Zugmaschinen-Einstellautomaten (7) und/oder mindestens einem Anbaugeräte-Einstellautomaten (9) vorgibt.

8. Assistenzsystem nach einem der vorhergehenden Ansprüche, **dadurch gekennzeichnet, dass** die Koordinationsvorschrift (11) die zeitliche Abfolge von Steuerdaten mindestens eines Zugmaschinen-Einstellautomaten (7) und/oder mindestens eines Anbaugeräte-Einstellautomaten (9) umfasst und dass eine Gespann-Optimierungsstrategie die Umsetzung von Gespann-Optimierungszielen umfasst, indem Steuerdaten basierend auf der Koordinationsvorschrift (11) und insbesondere der zeitlichen Abfolge der Steuerdaten vorausschauend berücksichtigt werden.

9. Assistenzsystem nach einem der vorhergehenden Ansprüche, **dadurch gekennzeichnet, dass** das Assistenzsystem (1) ein Fahrerassistenzsystem (13) mit einer Ein-/Ausgabeeinheit (14) für den Dialog mit dem Benutzer aufweist und dass die Gespann-Optimierungsstrategie über die Ein-/Ausgabeeinheit (14) vom Benutzer parametrierbar ist, vorzugsweise, dass der Prozess-Supervisor (10) basierend auf der Koordinationsvorschrift (11) über die Ein-/Ausgabeeinheit (14) verschiedene Gespann-Optimierungsstrategien zur Auswahl und/oder Parametrierung durch den Benutzer stellt.

10. Assistenzsystem nach einem der vorhergehenden Ansprüche, **dadurch gekennzeichnet, dass** die Gespann-Optimierungsstrategie mehrere Gespann-Optimierungsziele aufweist, vorzugsweise, dass den Gespann-Optimierungszielen über die Ein-/Ausgabeeinheit (14) jeweils eine Gewichtung zugeordnet werden kann und dass der Prozess-Supervisor (10) die einzelnen Gespann-Optimierungsziele gewichtet umsetzt.

11. Assistenzsystem nach einem der vorhergehenden Ansprüche, **dadurch gekennzeichnet, dass** das Assistenzsystem (1) mehrere Zugmaschinen-Einstellautomaten (7) aufweist, die der Erzeugung von Maschinenparametern zugeordneter Arbeitsaggregate der Zugmaschine (3) dienen, und/oder, dass das Assistenzsystem (1) mehrere Anbaugeräte-Einstellautomaten (9) aufweist, die der Erzeugung von Maschinenparametern zugeordneter Arbeitsaggregate des Anbaugerätes (4) dienen.

12. Assistenzsystem nach einem der vorhergehenden Ansprüche, **dadurch gekennzeichnet, dass** der Prozess-Supervisor (10) die Koordinationsvorschrift (11) aus einer Charakteristik des mindestens einen Zugmaschinen-Einstellautomaten (7) und aus einer Charakteristik des mindestens einen Anbaugeräte-Einstellautomaten (9) ableitet, oder, dass der Prozess-Supervisor (10) die Koordinationsvorschrift (11) von einem externen, insbesondere cloudbasierten Datenverarbeitungssystem empfängt.

13. Assistenzsystem nach einem der vorhergehenden Ansprüche, **dadurch gekennzeichnet, dass** der mindestens eine Zugmaschinen-Einstellautomat (7) als Motor-Einstellautomat, als Getriebe-Einstellautomat, als Hydraulik-Einstellautomat, als Zapfwellen-Einstellautomat, als Reifendruck-Einstellautomat o. dgl. ausgestaltet ist.

14. Assistenzsystem nach einem der vorhergehenden Ansprüche, **dadurch gekennzeichnet, dass** ein Gespann-Optimierungsziel die Optimierung einer Bearbeitungsqualität, eines Durchsatzes, eines Verschleißes oder einer Effizienz des landwirtschaftlichen Gespanns (2) ist.

15. Landwirtschaftliches Gespann mit einer Zugmaschine (3) und einem Anbaugerät (4) **dadurch gekennzeichnet, dass** das landwirtschaftliche Gespann (2) ein Assistenzsystem (1) nach einem der vorhergehenden Ansprüche aufweist.

## Claims

1. An assistance system for an agricultural vehicle and trailer combination (2), wherein the agricultural vehicle and trailer combination (2), formed by at least one towing vehicle (3) and at least one mounted implement (4), has a number of working assemblies, wherein, in order to control towing vehicle working assemblies (6), the assistance system (1) has at least one towing vehicle automatic setting system (7) which processes control data in order to generate machine parameters for the relevant towing vehicle working assembly (6), wherein, in order to control mounted implement working assemblies (8), the assistance system (1) has at least one mounted implement automatic setting system (9) which processes control data in order to generate machine parameters for the relevant mounted implement working assembly (8), wherein the assistance system (1) has a process supervisor (10) which coordinates towing vehicle automatic setting systems (7) and mounted implement automatic setting systems (9) in the context of an optimisation process in order to implement a vehicle and trailer combination optimisation strategy with at least one vehicle and trailer combination optimisation objective,
**characterized in that**
the assistance system is configured in a manner such that a coordination specification (11) is present or generated in the process supervisor (10), the coordination specification being derived from the at least one towing vehicle automatic setting system (7) and the at least one mounted implement automatic setting system (9), and **in that** on the basis of the coordination specification (11), the process supervisor (10) carries out the coordination of the at least one towing vehicle automatic setting system (7) and the at least one mounted implement automatic setting system (9), whereby control data are transferred between the process supervisor (10) and at least one towing vehicle automatic setting system (7) and at least one mounted implement automatic setting system (9) and whereby control data are transferred between at least one towing vehicle automatic setting system (7) and at least one mounted implement automatic setting system (9).

2. The assistance system according to claim 1, **characterized in that**, in the context of the implementation of the optimisation strategy, the coordination specification (11) defines which control data are to be transferred in which manner between at least one towing vehicle automatic setting system (7) and at least one mounted implement automatic setting system (9).

3. The assistance system according to claim 1 or claim 2, **characterized in that** the at least one towing vehicle automatic setting system (7) and the at least one mounted implement automatic setting system (9) are configured to implement individual optimisation objectives and **in that** the coordination specification (11) defines how, in the context of the implementation of the optimisation strategy, the process supervisor (10) generates and specifies individual optimisation objectives.

4. The assistance system according to one of the preceding claims, **characterized in that** the at least one towing vehicle automatic setting system (7) and the at least one mounted implement automatic setting system (9) are configured to implement individual optimisation objectives and **in that** the coordination specification (11) defines to what extent towing vehicle-side optimisation objectives and mounted implement-side optimisation objectives act in competition.

5. The assistance system according to claim 1 or claim 2, **characterized in that** the coordination specification (11) defines relationships between control data for at least one towing vehicle automatic setting system (7) and at least one mounted implement automatic setting system (9) which pertain to functional interconnections, in particular mechanical connections or couplings, between the relevant towing vehicle assembly and the relevant mounted implement assembly.

6. The assistance system according to one of the preceding claims, **characterized in that** the at least one towing vehicle automatic setting system (7) and/or the at least one mounted implement automatic setting system (9) comprises at least one characteristic diagram (12) which represents functional interconnections within the relevant working assembly.

7. The assistance system according to one of the preceding claims, **characterized in that** the vehicle and trailer combination optimisation strategy comprises a plurality of vehicle and trailer combination optimisation objectives which, in the context of the optimisation process, the process supervisor (10) transforms into individual optimisation objectives on the basis of the coordination specification (11) and specifies them to at least one towing vehicle automatic setting system (7) and/or at least one mounted implement automatic setting system (9).

8. The assistance system according to one of the preceding claims, **characterized in that** the coordination specification (11) comprises the temporal sequence of control data for at least one towing vehicle automatic setting system (7) and/or at least one mounted implement automatic setting system (9) and **in that** a vehicle and trailer combination optimisation strategy comprises the implementation of vehicle and trailer combination optimisation objectives, whereby control data are taken into consideration anticipatorily on the basis of the coordination specification (11) and in particular the temporal sequence of the control data.

9. The assistance system according to one of the preceding claims, **characterized in that** the assistance system (1) has a driver assistance system (13) with an input/output unit (14) for the dialogue with the user and **in that** the vehicle and trailer combination optimisation strategy can be parameterized by the user via the input/output unit (14), preferably **in that**, on the basis of the coordination specification (11), the process supervisor (10) presents different vehicle and trailer combination optimisation strategies via the input/output unit (14) for selection and/or parameterization by the user.

10. The assistance system according to one of the preceding claims, **characterized in that** the vehicle and trailer combination optimisation strategy has a plurality of vehicle and trailer combination optimisation objectives, preferably **in that** a respective weighting can be assigned to the vehicle and trailer combination optimisation objectives via the input/output unit (14) and **in that** the process supervisor (10) implements the individual vehicle and trailer combination optimisation objectives in a weighted manner.

11. The assistance system according to one of the preceding claims, **characterized in that** the assistance system (1) has a plurality of towing vehicle automatic setting systems (7) which serve to generate machine parameters of associated working assemblies of the towing vehicle (3), and/or **in that** the assistance system (1) has a plurality of mounted implement automatic setting systems (9) which serve to generate machine parameters of associated working assemblies of the mounted implement (4).

12. The assistance system according to one of the preceding claims, **characterized in that** the process supervisor (10) derives the coordination specification (11) from a characteristic of the at least one towing vehicle automatic setting system (7) and from a characteristic of the at least one mounted implement automatic setting system (9), or **in that** the process supervisor (10) receives the coordination specification (11) from an external, in particular cloud-based, data processing system.

13. The assistance system according to one of the preceding claims, **characterized in that** the at least one towing vehicle automatic setting system (7) is designed as an engine automatic setting system, as a transmission automatic setting system, as a hydraulics automatic setting system, as a power take-off automatic setting system, as a tyre pressure automatic setting system or the like.

14. The assistance system according to one of the preceding claims, **characterized in that** a vehicle and trailer combination optimisation objective is the optimisation of a processing quality, a throughput, a wear or an efficiency of the agricultural vehicle and trailer combination (2).

15. An agricultural vehicle and trailer combination with a towing vehicle (3) and a mounted implement (4), **characterized in that** the agricultural vehicle and trailer combination (2) has an assistance system (1) according to one of the preceding claims.

## Revendications

1. Système d'assistance destiné à un attelage agricole (2), ledit attelage agricole (2), constitué d'au moins un engin de traction (3) et d'au moins un outil attelé (4), présentant un certain nombre d'organes de travail, le système d'assistance (1) comprenant, pour l'activation d'organes de travail d'engin de traction (6), au moins un automate de réglage d'engin de traction (7) qui traite des données de commande aux fins de générer des paramètres machine pour l'organe de travail d'engin de traction (6) concerné, le système d'assistance (1) comprenant, pour l'activation d'organes de travail d'outil attelé (8), au moins un automate de réglage d'outil attelé (9) qui traite des données de commande aux fins de générer des paramètres machine pour l'organe de travail d'outil attelé (8) concerné, le système d'assistance (1) comprenant un superviseur de processus (10) qui coordonne des automates de réglage d'engin de traction (7) et des automates de réglage d'outil attelé (9), dans le cadre d'un processus d'optimisation pour la mise en œuvre d'une stratégie d'optimisation d'attelage avec au moins un objectif d'optimisation d'attelage,
**caractérisé en ce que**
le système d'assistance est conçu de manière à ce que dans le superviseur de processus (10), il existe ou il est généré une consigne de coordination (11) qui est dérivée de l'automate de réglage d'engin de traction (7), au nombre d'au moins un, et de l'automate de réglage d'outil attelé (9), au nombre d'au moins un, et **en ce que** le superviseur de processus (10) effectue la coordination de l'automate de réglage d'engin de traction (7), au nombre d'au moins un, et de l'automate de réglage d'outil attelé (9), au nombre d'au moins un, sur la base de la consigne de coordination (11), par le fait que des données de commande sont transmises entre le superviseur de processus (10) et au moins un automate de réglage d'engin de traction (7) et au moins un automate de réglage d'outil attelé (9), et par le fait que des données de commande sont transmises entre au moins un automate de réglage d'engin de traction (7) et au moins un automate de réglage d'outil attelé (9).

2. Système d'assistance selon la revendication 1, **caractérisé en ce que** la consigne de coordination (11) définit quelles données de commande doivent être transmises, et de quelle manière, entre au moins un automate de réglage d'engin de traction (7) et au moins un automate de réglage d'outil attelé (9), dans le cadre de la mise en œuvre de la stratégie d'optimisation.

3. Système d'assistance selon la revendication 1 ou 2, **caractérisé en ce que** l'automate de réglage d'engin de traction (7), au nombre d'au moins un, et l'automate de réglage d'outil attelé (9), au nombre d'au moins un, sont conçus pour mettre en œuvre des objectifs d'optimisation individuels, et **en ce que** la consigne de coordination (11) définit de quelle manière le superviseur de processus (10) génère et prédéfinit des objectifs d'optimisation individuels dans le cadre de la mise en œuvre de la stratégie d'optimisation.

4. Système d'assistance selon une des revendications précédentes, **caractérisé en ce que** l'automate de réglage d'engin de traction (7), au nombre d'au moins un, et l'automate de réglage d'outil attelé (9), au nombre d'au moins un, sont conçus pour mettre en œuvre des objectifs d'optimisation individuels, et **en ce que** la consigne de coordination (11) définit dans quelle mesure des objectifs d'optimisation côté engin de traction et des objectifs d'optimisation côté outil attelé ont une action concurrentielle.

5. Système d'assistance selon la revendication 1 ou 2, **caractérisée en ce que** la consigne de coordination (11) définit, entre des données de commande d'au moins un automate de réglage d'engin de traction (7) et d'au moins un automate de réglage d'outil attelé (9), des relations qui se fondent sur des rapports fonctionnels, notamment des liaisons ou des accouplements mécaniques entre l'organe d'engin de traction concerné et l'organe d'outil attelé concerné.

6. Système d'assistance selon une des revendications précédentes, **caractérisé en ce que** l'automate de réglage d'engin de traction (7), au nombre d'au moins un, et/ou l'automate de réglage d'outil attelé (9), au nombre d'au moins un, présentent au moins un diagramme caractéristique (12) qui représente des rapports fonctionnels dans l'organe de travail concerné.

7. Système d'assistance selon une des revendications précédentes, **caractérisé en ce que** la stratégie d'optimisation de l'attelage comprend plusieurs objectifs d'optimisation d'attelage que le superviseur de processus (10) transpose en objectifs d'optimisation individuels dans le cadre du processus d'optimisation, sur la base de la consigne de coordination (11), et qu'il prédéfinit pour au moins un automate de réglage d'engin de traction (7) et/ou au moins un automate de réglage d'outil attelé (9).

8. Système d'assistance selon une des revendications précédentes, **caractérisé en ce que** la consigne de coordination (11) comprend la succession dans le temps de données de commande d'au moins un automate de réglage d'engin de traction (7) et/ou d'au moins un automate de réglage d'outil attelé (9), et **en ce qu'**une stratégie d'optimisation d'attelage comprend la mise en œuvre d'objectifs d'optimisation d'attelage, par le fait que des données de commande sont prises en compte de manière prédictive sur la base de la consigne de coordination (11) et notamment de la succession dans le temps des données de commande.

9. Système d'assistance selon une des revendications précédentes, **caractérisé en ce que** le système d'assistance (1) est un système d'assistance au conducteur (13) doté d'une unité d'entrée/sortie (14) pour le dialogue avec l'utilisateur, et **en ce que** la stratégie d'optimisation d'attelage peut être paramétrée par l'utilisateur, par l'intermédiaire de l'unité d'entrée/sortie (14), de préférence **en ce que** le superviseur de processus (10), sur la base de la consigne de coordination (11), propose différentes stratégies d'optimisation d'attelage via l'automate de réglage d'outil attelé (9), en vue d'une sélection et/ou d'un paramétrage par l'utilisateur.

10. Système d'assistance selon une des revendications précédentes, **caractérisé en ce que** la stratégie d'optimisation d'attelage présente plusieurs objectifs d'optimisation d'attelage, de préférence **en ce qu'**une pondération peut être attribuée respectivement aux objectifs d'optimisation d'attelage, par l'intermédiaire de l'unité d'entrée/sortie (14), et **en ce que** le superviseur de processus (10) transpose de manière pondérée les différents objectifs d'optimisation d'attelage.

11. Système d'assistance selon une des revendications précédentes, **caractérisé en ce que** le système d'assistance (1) présente plusieurs automates de réglage d'engin de traction (7) qui servent à la génération de paramètres machine d'organes de travail associés à l'engin de traction (3), et/ou **en ce que** le système d'assistance (1) présente plusieurs automates de réglage d'outil attelé (9) qui servent à la génération de paramètres machine d'organes de travail associés à l'outil attelé (4).

12. Système d'assistance selon une des revendications précédentes, **caractérisé en ce que** le superviseur de processus (10) déduit la consigne de coordination (11) d'une caractéristique de l'automate de réglage d'engin de traction (7), au nombre d'au moins un, et d'une caractéristique de l'automate de réglage d'outil attelé (9), au nombre d'au moins un, ou **en ce que** le superviseur de processus (10) reçoit la consigne de coordination (11) d'un système de traitement de données externe, notamment basé sur le nuage.

13. Système d'assistance selon une des revendications précédentes, **caractérisé en ce que** l'automate de réglage d'engin de traction (7), au nombre d'au moins un, est conçu comme automate de réglage de moteur, comme automate de réglage de transmission, comme automate de réglage hydraulique, comme automate de réglage de prise de force, comme automate de réglage de pression des pneumatiques ou comme des dispositifs analogues.

14. Système d'assistance selon une des revendications précédentes, **caractérisé en ce qu'**un objectif d'optimisation d'attelage consiste en l'optimisation d'une qualité de traitement, d'un débit, d'une usure ou d'une efficacité de l'attelage (2) agricole.

15. Attelage agricole comprenant un engin de traction (3) et un outil attelé (4), **caractérisé en ce que** l'attelage agricole (2) présente un système d'assistance (1) selon une des revendications précédentes.
